# EUROPÄISCHE PATENTSCHRIFT

(11) **EP 3 155 469 B1**
(45) Veröffentlichungstag und Bekanntmachung des Hinweises auf die Patenterteilung: **11.11.2020**
(21) Anmeldenummer: 15727667.6
(22) Anmeldetag: 10.06.2015
(51) Int. Cl.: G02B 21/06, G02B 21/00, G02B 27/09

(54) **LICHTBLATTMIKROSKOPIE MIT MESO-OPTISCHEN ELEMENTEN**
LIGHT SHEET MICROSCOPY USING MESO-OPTICAL ELEMENTS
MICROSCOPIE À FEUILLETS LUMINEUX UTILISANT DES ÉLÉMENTS MÉSO-OPTIQUES

(30) Priorität: 11.06.2014 DE 102014008811
(43) Veröffentlichungstag der Anmeldung: 19.04.2017
(73) Patentinhaber: Dodt, Hans-Ulrich, 80796 München (DE); Saghafi, Saiedeh, 1160 Wien (AT)
(72) Erfinder: SAGHAFI, Saiedeh, A-1160 Wien (AT)
(74) Vertreter: Schwahn, Hartmut
(86) Internationale Anmeldenummer: PCT/EP2015/062887
(87) Internationale Veröffentlichungsnummer: WO 2015/189240

(56) Entgegenhaltungen:
- EP-A2- 0 627 643
- WO-A2-2009/080210
- CA-A1- 2 668 095
- DE-A1-102010 046 133
- US-A- 1 988 946

## Beschreibung

Die vorliegende Erfindung betrifft Vorrichtungen und Verfahren zur Erzeugung von Lichtblättern und dünnen Lichtstrahlen hoher Rayleighlängen durch die Verwendung mindestens zweier zusammengeschalteter meso-optischer Elemente.

Die Erzeugung von Linienstrahlen oder dünnes Lichtblättern hoher Rayleighlänge ist für verschiedene technische Anwendungen, bei denen Lichtstrahlen mit möglichst flachem transversalem Intensitätsprofil über eine große Länge des Lichtstrahls hinweg dienlich sind, gewünscht. Dazu zählt vorallem die sogenannte Lichtblattmikroskopie, vermittelst derer große Volumenpräparate dreidimensional schichtweise analysiert werden können. Dazu wird das transparente fluoreszierende Präparat von der Seite mit einem dünnen Lichtblatt (light sheet) durchstrahlt, wodurch ein "optischer Schnitt" entsteht. Der optische Schnitt, ergibt sich aus der optischen Anregung der Fluoreszenz spezifisch in der Ebene des Lichtblatts. Der Schnitt wird im Wesentlichen senkrecht zur Lichtblattebene mit einer Kamera aufgenommen. Die Wiederholung ermöglicht eine schichtweise dreidimensionale Rekonstruktion des Präparats. Entscheidend für die Auflösung in axialer Richtung ist die Dicke des Lichtblatts. Bei herkömmlicher gaußscher Optik mit im Wesentlichen gaußscher Verteilung des transversalen Intensitätsprofils wird das Profil des Lichtblatts mit Entfernung vom Fokus rasch breiter. Bekannte Alternativen verwenden daher anstelle von Gauß-Strahlen sogenannte Bessel-Strahlen, die mit geeigneten alternativen optischen Mitteln in an sich bekannter Weise erzeugt werden. Bessel-Strahlen weisen ein intensives zentrales Intensitätsmaximum auf. Sie zeigen aber unerwünschte Nebenmaxima in Form von koaxialen "Ringen". Diese Nebenmaxima erzeugen einen störenden Hintergrund, was je nach Anregungsverhalten des verwendeten Fluoreszenzfarbstoffs die effektive Dicke der analysierbaren optischen Schicht nachteilig verbreitert. Eine Verwendung oder Erzeugung von Bessel-Strahlen wurde in Patentdokumenten EP 0 627 643 A2, CA 2 668 095 A1, und WO 2009/080210 A2 offenbart.

Daneben hat sich die sogenannte "überaufgelöste" Lichtmikroskopie nach dem STED-Prinzip (stimulated emission depletion) entwickelt; sie ist beispielsweise in der DE 10 2009 008 646 beschrieben. Bei der STED-Mikroskopie wird die Beugungslimitierung des Anregungslichts dadurch umgangen, dass ein besonderer Anregungslichtstrahl bereitgestellt wird, welcher einen zentralen Anregungsfokus aufweist und der konzentrisch von einem weiteren Lichtstrahl mit zirkulärem Intensitätsprofil einer anderen Wellenlänge umgeben ist, dem sogenannten Abregungslichtstrahl. Durch die Kombination eines zentralen Anregungsstrahls mit dem diesen zirkulär umgebenden Abregungsstrahl in Verbindung mit dem Anregungsverhalten des Fluoreszenzfarbstoffs wird die Fluoreszenzemission im Präparat auf einen lokalen Bereich reduziert, der dabei unterhalb der Beugungsgrenze des Anregungslichts selbst liegt. Nachteilig bei den bekannten optischen Anordnungen zur Erzeugung der konzentrischen STED-Beleuchtung ist die geringe Rayleighlänge der Strahlen. In bekannten Anordnungen ist das wirkungsvolle Zusammenwirken der beiden konzentrischen Lichtstrahlen daher nur in einem Fokuspunkt in der optischen Achse der Strahlen möglich. Es ist wünschenswert, die Rayleighlänge dieser konzentrischen Lichtstrahlen zu vergrößern. Besonders soll dadurch auch die Kombination der STED-Mikroskopie mit der Lichtblattmikroskopie ermöglicht werden.

Daneben ist die Anwendung der Lichtblattmikroskopie auf Basis von Gauß-Strahlen aus Lasern zur Zwei-Photonenanregung bei Wellenlängen im Nahinfrarotbereich zur Durchleuchtung wenig transparenter Präparate aufgrund der dann sehr kleinen Fokuslängen kaum praktikabel.

Die Lösung dieses technischen Problems stellt die Erfindung ein neuartiges optisches System nach Anspruch 1 bereit, das auf der Verwendung mehrerer meso-optischer Elemente, insbesondere von Powell-Linsen oder Axicon-Linsen (Axicons), in Verbindung mit einem phasenverschiebenden Element, besonders einer asphärischer Linse, beruht. Die Erfindung macht sich die Erkenntnis zunutze, dass durch die Verwendung einer Linsengruppe mit entweder mindestens zwei Powell-Linsen oder mindestens zwei Axicons und eines dazwischen liegenden phasenverschiebenden Element, bevorzugt einer asphärischen Linse, im Strahlengang die Entstehung strahlverbreiternder Nebenmaxima verhindert wird, die bei der Verwendung von nur einem meso-optischen Element bekanntermaßen entstehen. Erfindungsgemäß löschen sich diese Nebenmaxima durch den Einsatz von zwei meso-optischen Elementen dadurch, dass sich die störenden Nebenmaxima in Folge einer Phasenverschiebung destruktiv überlagern und damit auslöschen können. Die Zentralstrahlen überlagern sich konstruktiv, wodurch letztlich ein Strahl mit hoher Rayleighlänge in Form eines langgestreckten dünnen Lichtblatts oder eines dünnen Zentralstrahls entsteht.

Demgemäß steht die Erfindung im Zusammenhang mit einem Lichtblatt oder einem Lichtstrahl, welches unter Verwendung meso-optischer Elemente erzeugt werden kann, was dadurch gekennzeichnet ist, dass die von den meso-optischen Elementen erzeugten nicht-gaußschen Strahlen sich so überlagern, dass die störende Nebenmaxima durch Interferenz verschwinden und nur das Hauptmaximum erhalten bleibt. Bevorzugt wird das Lichtblatt unter anderem unter Verwendung von zwei Powell-Linsen als die meso-optischen Elemente statisch erzeugt. Alternativ bevorzugt wird das Lichtblatt unter anderem unter Verwendung von zweier Axicons als die meso-optischen Elemente und unter optionaler Verwendung eines Scan-Spiegels zum Scannen des entstehenden Strahls (dynamisch) erzeugt.

In einer alternativen Variante, werden diffraktive Elemente als meso-optische Elemente eingesetzt. Ein diffraktives Element ist bevorzugt ein sogenannter "spatial light modulator".

Ein Vergleichsbeispiel betrifft ein Lichtblatt, was durch Überlagerung zweier erfindungsgemäß erzeugter Lichtblätter entsteht, wobei das eine Lichtblatt dieser beiden Lichtblätter eine längere Wellenlänge besitzt und das andere Lichtblatt, welches eine kürzere Wellenlänge aufweist, umschließt. Dabei werden bevorzugt die Wellenlängen der beiden Lichtblätter so gewählt, dass sie Anregungs- und Abregungswellenlängen darstellen, welche im fluoreszierenden Präparat im Rahmen der STED-Mikroskopie als extrem dünnes Lichtblatt wirksam werden.

In einem anderen Vergleichsbeispiel kann die Infrarotstrahlung eines Zwei-Photonenlasers (Femtosekundenlasers) zur Erzeugung des Lichtblatts eingesetzt werden zum Zwecke der Zwei-Photonenanregung von Fluoreszenz, um streuende oder große Präparate zu untersuchen. Bevorzugt wird konfokale Liniendetektion verwendet, um die Wirkung der Streuung des emittierten Lichts zu verringern. Alternativ oder zusätzlich wird eine strukturierte Beleuchtung verwendet, um die Wirkung der Streuung des emittierten Lichts zu verringern.

Gegenstand der Erfindung ist eine optische Anordnung nach Anspruch welche geeignet ist zur Erzeugung eines Lichtblatts oder Linienstrahls, welche zumindest eine erste Linsengruppe enthält, welche, in Strahlrichtung entlang der optischen Achse angeordnet, ein erstes meso-optisches Element, anschließend eine asphärische Linse und anschließend ein zweites meso-optisches Element enthält. Dabei sind erfindungsgemäß die Elemente der Linsengruppe derart angeordnet, dass sich die von den meso-optischen Elementen erzeugten nicht-gaußschen Strahlen so überlagern, dass die störenden Maxima durch Interferenz verschwinden und nur das Hauptmaximum erhalten bleibt. Insbesondere werden Lage und Apex-Winkel der meso-optischen Elemente so gewählt, dass es im Bereich des zentralen Lichtstrahls zu konstruktiver Interferenz kommt, die Nebenmaxima sich dagegen durch destruktive Interferenz auslöschen. Der Strahl trifft zunächst auf das erste meso-optische Element, wodurch ein nicht diffraktionslimitierter Strahl entsteht. Dieser Strahl geht durch die eine asphärische Linse, die eine genau berechnete Verschiebung von Amplitude und Phase des Strahls erzeugt. Danach geht der Strahl durch ein zweites meso-optisches Element, wonach durch destruktive Interferenz die Nebenmaxima (insbesondere Ringstruktur) verschwinden und ein zentraler, insbesondere hohler Strahl - bei der Verwendung von Axicons als die ersten und zweiten meso-optischen Elemente - beziehungsweise ein statisches Lichtblatt - bei der Verwendung von Powell-Linsen als die ersten und zweiten meso-optischen Elemente - entsteht.

Ein bevorzugter Gegenstand der Erfindung ist demgemäß eine optische Anordnung, wobei erstes und zweites meso-optisches Element in der Linsengruppe jeweils eine Powell-Linse ist, wodurch ein statisches Lichtblatt erzeugbar ist. Ein alternativer bevorzugter Gegenstand der Erfindung ist eine optische Anordnung, wobei erstes und zweites meso-optisches Element in der Linsengruppe jeweils ein Axicon ist, wodurch ein Lichtstrahl erzeugbar ist. Dieser Lichtstrahl ist insbesondere ein sogenannter "Hohlstrahl" mit dezidiertem zirkulärem ringförmigem Intensitätsprofil. In dieser Ausgestaltung kann er, wie nachstehend näher erläutert, vorteilhaft im Rahmen der STED-Mikroskopie als Anregungslichtstrahl und insbesondere als Abregungslichtstrahl eingesetzt werden. Damit der beschriebenen optischen Anordung auch ein sehr dünner hohler Strahl erzeugt werden kann, ist sie ideal für Superauflösung durch die Kombination mit STED geeignet. Bei STED wird die Beugungsgrenze in der Lichtmikroskopie dadurch durchbrochen, dass bei fluoreszierenden Präparaten der Zentralexitationsfokus von einem Abregungsring in einer anderen Wellenlänge umgeben wird, dadurch wird der Fokus gewissermaßen zusammengequetscht und kann kleiner als die Beugungsgrenze gemacht werden. Dies ist zwar auch bei einer Linie möglich, wie sie in der DE 10 2009 008 646 beschrieben ist. Hier ist gewissermaßen die zentrale Anregungslinie von einem Abregungsschlauch umgeben. Es werden jedoch Gauß-Strahlen zur An- und Abregung verwendet mit entsprechend geringer Rayleighlänge.

Die hier beschriebenen erfindungsgemäßen nicht klassischen Strahlen eignen sich hervorragend für eine STED-Lichtblattmikroskopie. So ist gemäß der Erfindung auch vorgesehen, dass so simultan zwei ineinander geschachtelte Strahlen mit verschiedener Wellenlänge erzeugt werden. Der innere extrem dünne Strahl kann durch einen Laser der Anregungswellenlänge erzeugt werden. Der diesen überlagernde hohle zweite Strahl kann durch einen Laser der Abregungswellenlänge erzeugt werden. Da beide Strahlen aufgrund der erfindungsgemäßen Anordnung große Rayleighlängen haben, kann so ein extrem dünner langer koaxialer Strahl erzeugt werden. Durch aktives Scannen dieses Strahls erzielt man ein extrem dünnes Lichtblatt.

Alternativ oder zusätzlich sieht die Erfindung vor, dass in der optischen Anordnung mittels der Verwendung von Powell-Linsen als erstes und zweites meso-optisches Element in der Linsengruppe ein statisches Lichtblatt in Form eines hohlen Lichtblatts erzeugt wird. Wie beim Einzelstrahl kann dann durch Überlagerung des hohlen Lichtblatts längerer Wellenlänge mit einem koaxialen zentralen statischen Lichtblatt kürzerer Wellenlänge ein kombiniertes Lichtblatt erzeugt werden, das im Rahmen von STED eingesetzt werden kann. Dies stellt eine große Verbesserung dar, da die Dicke des (einfachen) Lichtblatts bislang der auflösungsbegrenzende Faktor der Lichtblatt-Mikroskopie ist.

Wie hier beschrieben, ist in einer bevorzugten Ausgestaltung der Erfindung der Linsengruppe zumindest eine Sammellinse nachgeschaltet, welche die Funktion hat, den Lichtstrahl, welcher die Linsengruppe verlässt, zu einem Linienstrahl zu fokussieren. Wird insbesondere durch die Verwendung von Axicons als erstes und zweites meso-optisches Element in der erfindungsgemäßen optischen Anordnung ein zentraler Hohlstrahl erzeugt, kann dieser auf eine insbesondere plankonvexe Linse treffen, welche den Strahl zu einer extrem dünnen Linie fokussiert. In einer bevorzugten Variante dieser Ausgestaltung ist zusätzlich ein Scan-Spiegel vorgesehen. Durch Bewegen des Scan-Spiegels um senkrechte Achse entsteht durch Verschiebung der Linie ein extrem dünnes Lichtblatt mit sehr hoher Rayleighlänge. Eine lineare Verschiebung der Linie kann dabei bevorzugt entweder durch entsprechende Bewegung des Scan-Spiegels in radialer sowie in X- und Y-Richtung erreicht werden. Alternativ wird bevorzugt in Strahlrichtung vor dem Scan-Spiegel vorgesehene Sammellinse in Strahlrichtung nach dem Scan-Spiegel angeordnet oder es wird dem Scan-Spiegel noch eine Sammellinse nachgeordnet.

Ein bevorzugter Gegenstand der Erfindung ist demgemäß auch eine optische Anordnung, wobei der erfindungsgemäßen Linsengruppe ein Scan-Spiegel, geeignet zur aktiven Strahlablenkung und zur dynamischen Erzeugung eines Lichtblatts nachgeschaltet ist. Gegenstand der Erfindung sind somit auch ein Verfahren zur Erzeugung eines Lichtblatts, wobei das Verfahren zur Erzeugung eines dünnen Lichtstrahls durchgeführt wird und der Lichtstrahl mit über einem sich bewegenden Scan-Spiegel abgelenkt wird, sodass der fokussierte Lichtstrahl bei der Bewegung des Scan-Spiegels eine Ebene überstreicht und so dass ein Lichtblatt gebildet wird.

In bevorzugter Ausgestaltung ist der erfindungsgemäßen Linsengruppe eine Lichtquelle in Strahlrichtung vorgeschaltet, die spezifisch ausgebildet ist, um einen Lichtstrahl mit abgeflachtem transversaler Intensitätsprofil, ein sogenannter "flat top"-Strahl (FTB) zu erzeugen. Bevorzugt enthält die Lichtquelle dazu zwei gegeneinander gesetzte asphärische Linsen. Insbesondere bei der Ausführung mit einem durch Scanning erzeugten Lichtblatt wird zunächst aus einem anfänglich gaußschen Laserstrahl mit entsprechenden optischen Elementen, zum Beispiel zwei asphärischen Linsen, ein geebneter abgeflachter gaußscher Laserstrahl (FGB) erzeugt.

Gegenstand der Erfindung ist auch ein Verfahren zu Erzeugung eines dünnen Lichtblatts oder Linienstrahls, wobei ein Lichtstrahl durch die erfindungsgemäße optische Anordnung geschickt wird und wobei die Elemente der erfindungsgemäßen Linsengruppe derart in ihrer Lage entlang der optischen Achse des Lichtstrahls positioniert werden und gegebenenfalls der Apex-Winkel der meso-optischen Elemente in der erfindungsgemäßen Gruppe derart angepasst wird, dass sich eine Phasenverschiebung entlang der transversalen Ausdehnung des Lichtstrahls derart ergibt, dass sich Zentralstrahlen konstruktiv überlagern und sich Nebenmaxima durch destruktive Interferenz auslöschen, wodurch ein Lichtstrahl oder ein Lichtblatt entsteht. Dieser Lichtstrahl oder das Lichtblatt weisen eine außerordentliche große Rayleighlänge auf. In einer Variante dieses Verfahrens ist zusätzlich vorgesehen, dass aus dem erzeugten dünnen Lichtstrahl durch aktives Scannen ein Lichtblatt erzeugt wird, wobei der vorstehend erzeugte dünne Lichtstrahl mit einem sich bewegenden Scan-Spiegel abgelenkt wird, sodass der fokussierte Lichtstrahl bei der Bewegung des Scan-Spiegels eine Ebene überstreicht und so das Lichtblatt gebildet wird. Dies ist eine Alternative zu der vorstehend beschriebenen Ausführung, bei der, spezifisch durch Verwendung von Powell-Linsen als die ersten und zweiten meso-optischen Elemente der erfindungsgemäßen Linsengruppe unmittelbar ein sogenanntes "statisches" Lichtblatt erzeugt wird.

Als Vergleichsbeispiel ist Verfahren, wobei zwei überlagerte Lichtblätter unterschiedlicher Wellenlänge gebildet werden, wobei das eine Lichtblatt längerer Wellenlänge hohl ist und das andere Lichtblatt kürzerer Wellenlänge umschließt. Bevorzugt sind die Anregungs- und Abregungswellenlängen so gewählt, dass im fluoreszierenden Objekt durch STED (stimulated emission depletion) ein extrem dünnes Lichtblatt wirksam wird.

Vorteilhafterweise ist der mittels der erfindungsgemäßen optischen Anordnung erzeugte Linienstrahl sehr dünn, was bedeutet, dass sich die gesamte Lichtenergie (insbesondere Laserenergie) auf einen sehr kleinen Querschnitt von etwa 1 µm Durchmesser konzentriert. Derartig kleine Anregungsquerschnitte erlauben vorteilhafterweise die Verwendung von Femtosekundenlasern zur Zwei-Photonenanregung von Fluoreszenz in einem Präparat. Die Verwendung solcher Laser ist für die Lichtblattmikroskopie vorteilhaft, da diese Licht im Nahinfrarotbereich aussenden und dieses in nicht völlig transparenten Präparaten weniger gestreut wird als sichtbares Licht. Die Verwendbarkeit von Zwei-Photonenlasern an sich ist bekannt. Da sich aber bei gaußschen Strahlen der Anregungsquerschnitt mit zunehmender Entfernung vom Fokus sehr stark aufweitet, war die brauchbare Anregungslinie nur 400 µm lang. Bei der erfindungsgemäßen Lösung nimmt der Anregungsquerschnitt mit Entfernung zum Fokus kaum zu, sodass man auch mit Zwei-Photonenanregung eine lange sehr dünne Anregungslinie erhalten kann. Durch das hierin beschriebene Scannen des Linienstrahls kann man ein großes dünnes sogenanntes Zwei-Photonen-Lichtblatt erhalten. Dies ist vor allem bei der Verwendung von streuenden oder großen transparenten Präparaten vorteilhaft. Bevorzugt kann dieses System noch mit konfokaler Liniendetektion verbunden werden, um den Effekt der Streuung des sichtbaren emitierten Lichts zu verringern. Im Sinne dieser Erfindung wird unter einer "konfokalen Liniendetektion" verstanden, dass mit einer mechanischen oder elektronischen Schlitzblende gestreutes Licht sequentiell vor der Detektion auf dem Detektor ausgeblendet wird. Die Schlitzblende ist optisch konjugiert zur Anregungslinie angeordnet. Statt einer Schlitzblende kann auch strukturierte Beleuchtung zur Streulichtunterdrückung verwendet werden. Demgemäß sieht die Erfindung auch vor, eine optische Anordnung gemäß der Erfindung, die zusätzlich eine insbesondere mechanisch oder elektronisch gesteuerte Schlitzblende aufweist, welche optisch konjugiert zur Anregungslinie angeordnet ist, um gestreutes Licht sequentiell vor eine Detektion ausblendbar zu machen. Gegenstand der Erfindung sind somit auch Verfahren Verfahren, wobei konfokale Liniendetektion und/oder strukturierte Beleuchtung verwendet wird, um die Wirkung der Streuung des emittierten Lichts zu verringern.

Gegenstand der Erfindung ist auch Verfahren wobei Infrarotstrahlung eines Femtosekundenlasers zur Zwei-Photonen-anregung von Fluoreszenz in dem Präparat verwendet wird, besonders zur mikroskopischen Untersuchung von großen und/oder streuenden Präparaten.

Anderes Vergleichsbeispiel ist ein Verfahren zur mikroskopischen Untersuchung von großen und/oder streuenden Präparaten, wobei eine Zwei-Photonenanregung von Fluoreszenz in dem Präparat mittels der erfindungsgemäßen Anordnung erzeugt wird.

Anderes Vergleichsbeispiel ist schließlich auch die Verwendung der hierin offenbarten erfindungsgemäßen optischen Anordnung zur Erzeugung eines dünnen Lichtblatts beziehungsweise eines Lichtstrahls hoher Rayleighlänge.

Die Erfindung wird durch die nachfolgenden Ausführungsbeispiele näher beschrieben.

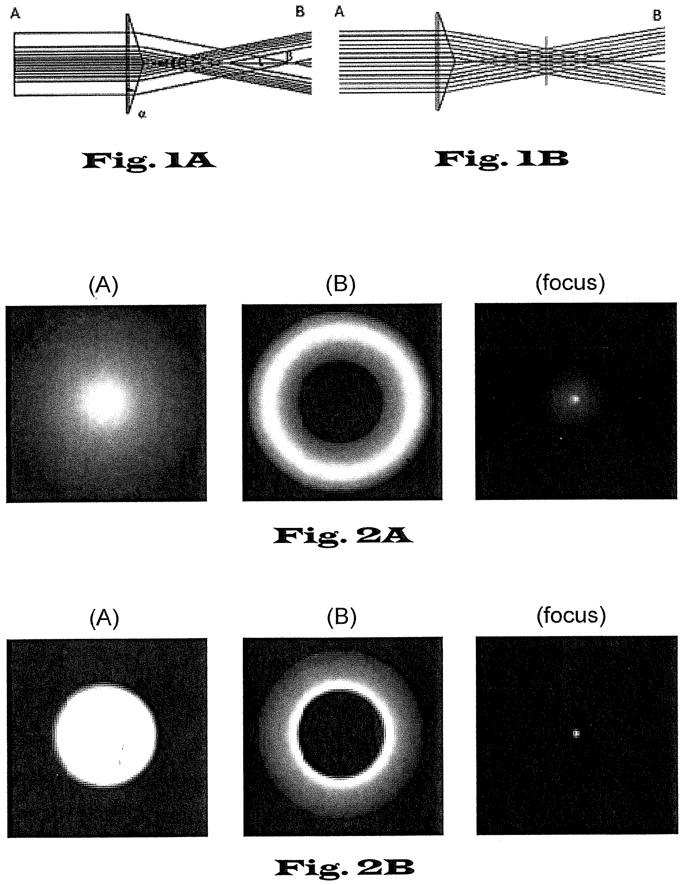

- Figur 1: zeigt den Strahlverlauf und dabei schematisch skizziert anhand der Liniendichte das transversale Intensitätsprofil beim Durchtritt eines Lichtstrahls durch ein mesooptisches Element an Punkt A, im Fokuspunkt und an Punkt B wird das transversale Intensitätsprofil erfasst. Figur 1A zeigt den Durchtritt eines Laserstrahls mit transversalem Gauß-Profil (Gauß-Strahl) durch eine AxiconLinse. Figur 1B zeigt den Durchtritt eines Laserstrahls mit transversalem abgeflachtem Gauß-Profil (FGB) durch eine Axicon-Linse.
- Figur 2: zeigt schematisch die Intensitätsverteilungen der Lichtstrahlen nach Figuren 1A und 1B an der Apertur der Axicon-Linse (A) und in einiger Entfernung vom Fokus (B) sowie im Fokuspunkt (focus) selbst. Figur 2A zeigt die Intensitätsverteilung eines gaußschen Laserstrahls (Figur 1A). Figur 2B zeigt die entsprechenden Intensitätsverteilungen eines abgeflachten gaußschen Laserstrahls (Figur 1B).

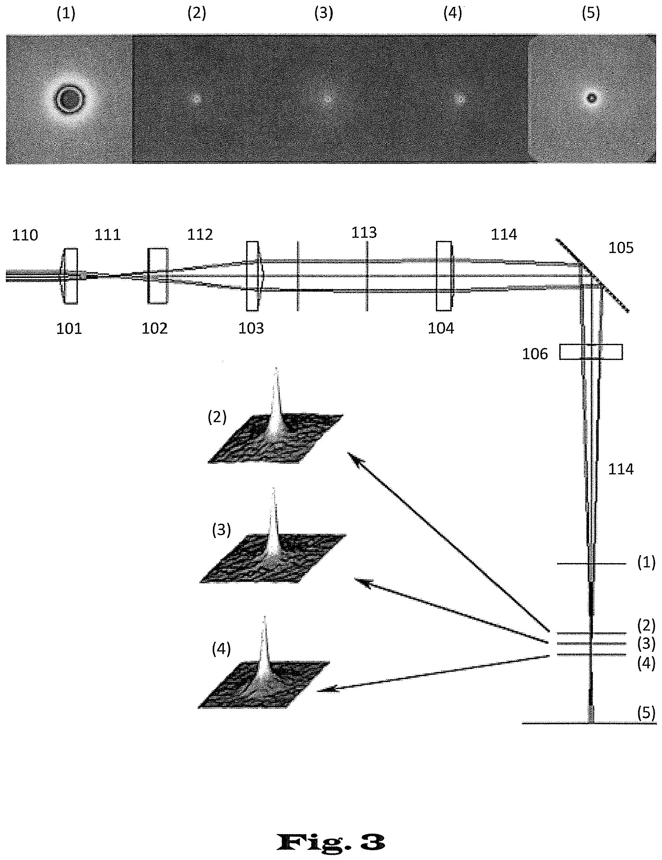

- Figur 3: zeigt eine nicht maßstabsgerechte schematische Darstellung einer spezifischen Ausführung der Erfindung im Zusammenhang mit einem durch aktives Scanning erzeugten Lichtblatt. Ein Laserstrahl 110 trifft zunächst auf ein erstes meso-optisches Element 101, besonders ein Axicon, wodurch ein nicht diffraktionslimitierter Strahl 111 entsteht. Dieser Strahl geht durch eine asphärische Linse als Phasenelement 102, das eine genau berechnete Verschiebung von Amplitude und Phase des Strahls erzeugt. Danach geht der so phasenkorrigierte Strahl 112 durch ein zweites meso-optisches Element 103, insbesondere ein Axicon, wonach durch destruktive Interferenz die Nebenmaxima (Ringstruktur) verschwinden und ein zentraler insbesondere hohler Strahl 113 entsteht. In der dargestellten spezifischen Ausführung trifft dieser Strahl 113 dann auf eine plankonvexe Linse 104 und einen Scan-Spiegel 105. Die Linse 104 fokussiert den Strahl zu einer extrem dünnen Linie 114. Wird der Scan-Spiegel 105 dann um eine Achse senkrecht zur Zeichenebene bewegt, entsteht durch Verschiebung der Linie ein extrem dünnes Lichtblatt mit sehr großer Rayleighlänge. Eine lineare Verschiebung der Linie 114 kann dabei zusätzlich entweder durch entsprechende Bewegung des Spiegels 105 in radialer sowie in X- und Y-Richtung erreicht werden oder in dem die vor dem Spiegel 105 gezeichnete Linse 104 nach dem Spiegel angeordnet wird oder dem Spiegel 105 noch eine Linse 106 nachgeordnet wird. Zur Illustration sind die transversalen Strahlprofile in verschiedenen Ebenen des fokussierten Strahls 114 beispielhaft dargestellt: (1): 45 mm Abstand vom Spiegel, (2): 60 mm Abstand vom Spiegel, (3): 65 mm Abstand vom Spiegel, (4) 70 mm Abstand vom Spiegel, (5): 130 mm Abstand vom Spiegel.

## Patentansprüche

1. Optische Anordnung, geeignet zur Erzeugung eines Lichtblatts oder Lichtstrahls, enthaltend:
eine erste Linsengruppe (100), die, angeordnet in Strahlrichtung entlang der optischen Achse,
erstes meso-optisches Element (101),
phasenverschiebendes Element (102) und
zweites meso-optisches Element (103),
enthält, wobei erstes und zweites meso-optisches Element (101,103) ausgewählt ist aus Powell-Linse, Axicon und diffraktivem Element, und wobei erstes und zweites meso-optisches Element (101,103) so entlang der optischen Achse positioniert sind, dass die von diesen Elementen erzeugten nicht-gaußschen Strahlen sich so überlagern, dass die störenden Nebenmaxima durch Interferenz verschwinden und nur das Hauptmaxima erhalten bleibt.

2. Optische Anordnung nach Anspruch 1, geeignet zur Erzeugung eines statischen Lichtblatts, wobei erstes und zweites meso-optisches Element (101,103) jeweils eine Powell-Linse ist.

3. Optische Anordnung nach Anspruch 1, geeignet zur Erzeugung eines Lichtstrahls, wobei erstes und zweites meso-optisches Element (101,103) jeweils ein Axicon ist.

4. Optische Anordnung nach Anspruch 1, wobei das phasenverschiebende Element (102) eine asphärische Linse enthält oder daraus besteht.

5. Optische Anordnung nach einem der vorstehenden Ansprüche, wobei der Gruppe (100) zumindest eine Sammellinse (105,107) zur Fokussierung des Lichtstrahls zu einem Linienstrahl nachgeordnet ist.

6. Optische Anordnung nach Anspruch 5, wobei der Gruppe (100) ein Scan-Spiegel (106), geeignet zur aktiven Strahlablenkung zur Erzeugung eines Lichtblatts, nachgeschaltet ist.

7. Optische Anordnung nach einem der vorstehenden Ansprüche, wobei der Gruppe (100) eine Lichtquelle (200), spezifisch zur Erzeugung eines Lichtstrahls mit abgeflachtem Intensitätsprofil, vorgeschaltet ist.

8. Optische Anordnung nach Anspruch 7, wobei die Lichtquelle (200) zwei gegeneinander gesetzte asphärische Linsen enthält.

9. Optische Anordnung nach Anspruch 2, wobei zwei überlagerte Lichtblätter unterschiedlicher Wellenlänge ausbildbar sind, wobei das eine Lichtblatt längerer Wellenlänge hohl ist und das andere Lichtblatt kürzerer Wellenlänge umschließt.

10. Optische Anordnung nach einem der vorstehenden Ansprüche, wobei die meso-optischen Elemente (101,103) diffraktive Elemente sind.

11. Verfahren zur Erzeugung eines Lichtblatts oder Linienstrahls, wobei ein Lichtstrahl durch die optische Anordnung nach einem der vorstehenden Ansprüche geschickt wird und die Elemente der Linsengruppe (100) derart in ihrer Lage entlang der optischen Achse des Lichtstrahls positioniert werden und gegebenenfalls der Apex-Winkel der meso-optischen Elemente derart angepasst wird, dass sich eine Phasenverschiebung entlang der transversalen Ausdehnung des Lichtstrahls derart ergibt, dass sich die Zentralstrahlen konstruktiv überlagern und sich die Nebenmaxima durch destruktive Interferenz auslöschen, wodurch ein Lichtstrahl oder ein Lichtblatt entsteht.

12. Verfahren zur Erzeugung eines Lichtblatts, wobei das Verfahren nach Anspruch 11 zur Erzeugung eines dünnen Lichtstrahls durchgeführt wird, wobei als meso-optisches Element Axicon oder diffraktives Element verwendet wird, und der Lichtstrahl mit über einem sich bewegenden Scan-Spiegel abgelenkt wird, sodass der fokussierte Lichtstrahl bei der Bewegung des Scan-Spiegels eine Ebene überstreicht und so dass ein Lichtblatt gebildet wird.

13. Verfahren nach einem der Ansprüche 11 oder 12, wobei zwei überlagerte Lichtblätter unterschiedlicher Wellenlänge gebildet werden, wobei das eine Lichtblatt längerer Wellenlänge hohl ist und das andere Lichtblatt kürzerer Wellenlänge umschließt, wobei die Anregungs- und Abregungswellenlängen so gewählt werden, dass im fluoreszierenden Objekt durch STED (stimulated emission depletion) ein extrem dünnes Lichtblatt wirksam wird.

14. Verfahren nach einem der Ansprüche 11 bis 13, wobei Infrarotstrahlung eines Femtosekundenlasers zur Zwei-Photonenanregung von Fluoreszenz in dem Präparat verwendet wird.

15. Verfahren nach einem der Ansprüche 11 bis 14, wobei konfokale Liniendetektion verwendet wird, um die Wirkung der Streuung des emittierten Lichts zu verringern.

## Claims

1. Optical arrangement, suitable for generating a light sheet or light beam, comprising:
a first lens group (100) which comprises, arranged in a beam direction along an optical axis:
a first meso-optical element (101),
a phase-shifting element (102) and
a second meso-optical element (103),
wherein the first and second meso-optical elements (101, 103) are selected from a Powell lens, an axicon and a diffractive element, and wherein the first and second meso-optical elements (101, 103) are positioned along the optical axis in such a way that non-Gaussian beams generated by these elements overlap in such a way that the undesired secondary maxima disappear as a result of interference and only the main maxima remain.

2. Optical arrangement according to claim 1, suitable for generating a static light sheet, wherein each of the first and second meso-optical element (101, 103) is a Powell lens.

3. Optical arrangement according to claim 1, suitable for generating a light beam, wherein each of the first and second meso-optical element (101, 103) is an axicon.

4. Optical arrangement according to claim 1, wherein the phase-shifting element (102) comprises or consists of an aspherical lens.

5. Optical arrangement according to one of the preceding claims, wherein at least one converging lens (105, 107) for focusing the light beam to a line beam is provided downstream of the group (100).

6. Optical arrangement according to claim 5, wherein a scanning mirror (106), suitable for active beam deflection for generating a light sheet, is provided downstream of the group (100).

7. Optical arrangement according to one of the preceding claims, wherein a light source (200), specifically designed for generating a light beam with a flattened intensity profile, is provided upstream of the group (100).

8. Optical arrangement according to claim 7, wherein the light source (200) comprises two aspherical lenses set opposite one another.

9. Optical arrangement according to claim 2, wherein two overlapping light sheets of different wavelengths can be formed, wherein the one light sheet of longer wavelength is hollow and encloses the other light sheet of shorter wavelength.

10. Optical arrangement according to one of the preceding claims, wherein the meso-optical elements (101, 103) are diffractive elements.

11. Method for generating a light sheet or line beam, wherein a light beam is sent through the optical arrangement according to one of the preceding claims and the elements of the lens group (100) are positioned in such a way with respect to their position along the optical axis of the light beam and optionally the apex angle of the meso-optical elements is adapted in such a way that a phase shift along the transverse propagation of the light beam results in such a way that the central beams overlap constructively and the secondary maxima cancel each other out through destructive interference, resulting in a light beam or a light sheet.

12. Method for generating a light sheet, wherein the method according to claim 11 for generating a thin light beam is performed, wherein an axicon or diffractive element is used as the meso-optical element and the light beam is deflected with a moving scanning mirror so that the focused light beam scans a plane when the scanning mirror is moved and so that a light sheet is formed.

13. Method according to one of claims 11 or 12, wherein two overlapping light sheets of different wavelengths are formed, wherein the one light sheet of longer wavelength is hollow and encloses the other light sheet of shorter wavelength, wherein the excitation and de-excitation wavelengths are chosen in such a way that an extremely thin light sheet becomes effective in the fluorescent object by STED (stimulated emission depletion).

14. Method according to one of claims 11 to 13, wherein infrared irradiation of a femtosecond laser is used for two-photon excitation of fluorescence in the specimen.

15. Method according to one of claims 11 to 14, wherein confocal line detection is used to reduce the effect of scattering of the emitted light.

## Revendications

1. Ensemble optique, adapté pour générer une feuille de lumière ou un faisceau de lumière, contenant :
un premier groupe de lentilles (100), qui, disposé dans le sens de faisceau le long de l'axe optique, contient
un premier élément méso-optique (101),
un élément de décalage de phases (102) et
un deuxième élément méso-optique (103),
dans lequel le premier et le deuxième élément méso-optique (101, 103) sont choisis parmi une lentille de Powell, un axicon et un élément diffractif, et dans lequel le premier et le deuxième élément méso-optique (101, 103) sont positionnés le long de l'axe optique de telle sorte que les rayons non gaussiens générés par lesdits éléments se superposent de telle sorte que les maxima secondaires indésirables disparaissent du fait de l'interférence et que n'est conservé que le maximum principal.

2. Ensemble optique selon la revendication 1 adapté pour générer une feuille de lumière statique, dans lequel le premier et le deuxième élément méso-optique (101, 103) sont respectivement une lentille de Powell.

3. Ensemble optique selon la revendication 1 adapté pour générer un faisceau de lumière, dans lequel le premier et le deuxième élément méso-optique (101, 103) sont respectivement un axicon.

4. Ensemble optique selon la revendication 1, dans lequel l'élément de décalage de phases (102) contient ou est constitué d'une lentille non sphérique.

5. Ensemble optique selon l'une quelconque des revendications précédentes, dans lequel au moins une lentille convergente (105, 107) servant à concentrer le faisceau de lumière en un faisceau linéaire est disposée en aval du groupe (100).

6. Ensemble optique selon la revendication 5, dans lequel un miroir de balayage (106) adapté aux fins de la déviation de faisceau active pour générer une feuille de lumière est branché en aval du groupe (100).

7. Ensemble optique selon l'une quelconque des revendications précédentes, dans lequel une source de lumière (200) servant de manière spécifique à générer un faisceau de lumière avec un profil d'intensité aplati est branchée en amont du groupe (100).

8. Ensemble optique selon la revendication 7, dans lequel la source de lumière (200) contient deux lentilles non sphériques placées à l'opposé l'une de l'autre.

9. Ensemble optique selon la revendication 2, dans lequel deux feuilles de lumière superposées de longueur d'onde différente peuvent être réalisées, dans lequel une feuille de lumière d'une longueur d'onde plus longue est creuse et renferme l'autre feuille de lumière d'une longueur d'onde plus courte.

10. Ensemble optique selon l'une quelconque des revendications précédentes, dans lequel les éléments méso-optiques (101, 103) sont des éléments diffractifs.

11. Procédé servant à générer une feuille de lumière ou un faisceau linéaire, dans lequel un faisceau de lumière est envoyé à travers l'ensemble optique selon l'une quelconque des revendications précédentes et les éléments du groupe de lentilles (100) sont positionnés de telle manière dans leur position le long de l'axe optique du faisceau de lumière et éventuellement l'angle apex des éléments méso-optiques est adapté de telle manière qu'il résulte un décalage de phases le long de l'extension transversale du faisceau de lumière de telle manière que les faisceaux centraux se superposent de manière constructive et que les maxima secondaires sont supprimés par une interférence destructrive, ce qui a pour effet l'apparition d'un faisceau de lumière ou d'une feuille de lumière.

12. Procédé servant à générer une feuille de lumière, dans lequel le procédé selon la revendication 11 est mis en œuvre pour générer un faisceau de lumière fin, dans lequel un axicon ou un élément diffractif est utilisé en tant qu'élément méso-optique et le faisceau de lumière est dévié avec un miroir de balayage en mouvement de sorte que le faisceau de lumière concentré balaye lors du déplacement du miroir de balayage un plan et de sorte qu'une feuille de lumière est formée.

13. Procédé selon l'une quelconque des revendications 11 ou 12, dans lequel deux feuilles de lumière superposées d'une longueur d'onde différente sont formées, dans lequel une feuille de lumière d'une longueur d'onde plus longue est creuse et renferme l'autre feuille de lumière d'une longueur d'onde plus courte, dans lequel les longueurs d'onde d'excitation et de désexcitation sont choisies de telle sorte qu'une feuille de lumière extrêmement fine est active dans l'objet fluorescent du fait de la STED (stimulated emission depletion, déplétion par émission stimulée).

14. Procédé selon l'une quelconque des revendications 11 à 13, dans lequel un rayonnement infrarouge d'un laser femtoseconde est utilisé pour l'excitation à deux photons de la fluorescence dans la préparation.

15. Procédé selon l'une quelconque des revendications 11 à 14, dans lequel une détection linéaire confocale est utilisée pour réduire l'effet de la dispersion de la lumière émise.
